# EUROPEAN PATENT APPLICATION

(11) **EP 3 757 529 A2**
(43) Date of publication of application: **30.12.2020**
(21) Application number: 20181984.4
(22) Date of filing: 24.06.2020
(51) Int. Cl.: G01F 15/06

(54) **WATER METERING SYSTEM**

(30) Priority: 27.06.2019 FI 20194086 U
(71) Applicant: Vercon Oy, 38200 Sastamala (FI)
(72) Inventor: Arola, Tomi, 38200 Sastamala (FI)
(74) Representative: Papula Oy

(57) **Abstract**

Water metering system, which comprises a measuring sensor (2) arranged in connection with a site to be measured, such as a water pipe, for measuring the flow rate of water passing through it; an apartment unit (3) arranged in a residential or other apartment and arranged to receive measurement data from the measuring sensor (2) and connected to the measuring sensor (2) via cable. The system comprises a freely movable apartment display (4) paired with the apartment unit (3), the apartment display being arranged to receive water consumption information from the apartment unit, and being removably attachable to the apartment unit (3).

## Description

### FIELD OF THE INVENTION

The invention relates to the water metering system as defined in the preamble of claim 1.

### BACKGROUND OF THE INVENTION

The purpose of a water metering system is to measure water consumption in houses and apartments. Traditionally, water consumption has been measured by installing a measuring device in connection with the water supply line of the site, from which the amount of water used in the site can be measured. In connection with the measuring device, there may be a display panel or the like from which water consumption information can be viewed.

### PURPOSE OF THE INVENTION

The object of the invention is to provide a water metering system which allows the resident or user to monitor water consumption more easily and accurately and thus to react to consumption information. Based on the consumption information, the user quickly receives information about, among other things, possible leaks in the apartment.

### SUMMARY OF THE INVENTION

The water metering system according to the invention is characterized by what is set forth in claim 1.

According to the invention, the water metering system comprises a measuring sensor arranged in connection with a site to be measured, such as a water pipe, for measuring the flow rate of water passing through it, and an apartment unit arranged in a residential or other apartment and arranged to receive the measurement data from the measuring sensor and connected to the measuring sensor via cable. The system further comprises a freely movable apartment display paired with the apartment unit, wherein the apartment display is arranged to receive water consumption information from the apartment unit, and is removably attachable to the apartment unit. One advantage of the system is that the user is quickly informed of a possible leak in the pipeline.

According to one embodiment, the apartment display comprises a rechargeable battery, the apartment unit being arranged to charge the battery while the apartment display is attached to the apartment unit.

According to one embodiment, the apartment display is arranged to receive water consumption information from the apartment unit wirelessly.

According to one embodiment, the apartment display comprises a user interface by means of which the water metering system is arranged to be operated and controlled.

According to one embodiment, the system comprises a plurality of apartment units arranged in separate apartments, and a collection unit arranged to receive measurement data from the apartment units.

### LIST OF FIGURES

In the following, the invention will be described in detail by means of application examples with reference to the accompanying drawing, in which
- Fig. 1: shows a schematic diagram of the water metering system according to the invention,
- Fig. 2: shows a schematic diagram of an embodiment of a water metering system, and
- Fig. 3: shows a schematic diagram of an embodiment of a water metering system comprising a collection unit.

### DETAILED DESCRIPTION OF THE INVENTION

A water metering system is used to measure water consumption in a house or apartment, for example. Water consumption can be measured as a whole, in which case the measuring sensor is installed in the supply line of the site so that the total amount of water supplied to the site can be measured. The measuring sensor can also be installed in a smaller line if only the water consumption of a specific sub-site is desired to be measured. Several measuring sensors can also be installed, so that water consumption of several sites can be measured at the same time.

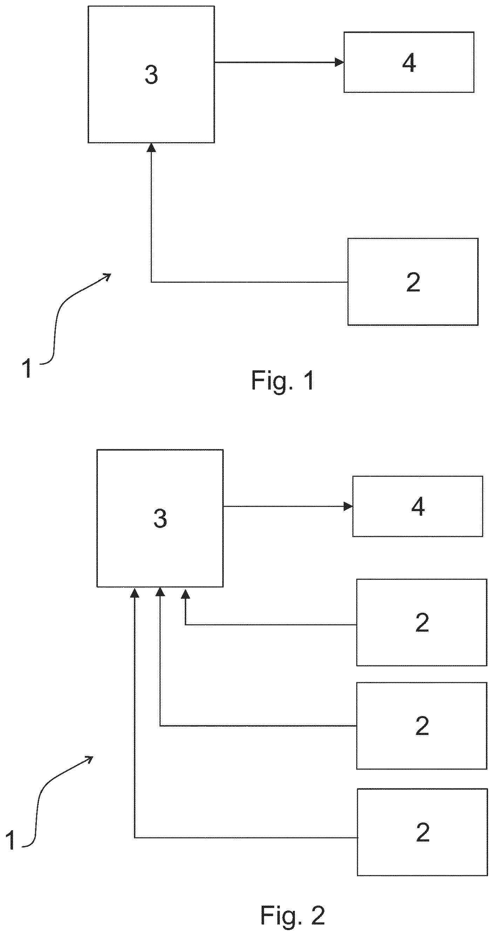

Figure 1 shows a schematic diagram of the water metering system 1. The water metering system comprises a measuring sensor 2 arranged in connection with a site to be measured, such as a water pipe, for measuring the flow rate of water passing through it. The water metering system also comprises an apartment unit 3 arranged in a residential or other apartment, and which is arranged to receive measurement data from the measuring sensor 2 and is connected to the measuring sensor 2 via cable. The system further comprises a portable apartment display 4 paired with the apartment unit 3, the apartment unit being arranged to receive the water consumption information from the apartment unit. The apartment display 4 may be removably attachable to the apartment unit 3.

The measuring sensor is installed in connection with the site to be measured for measuring the flow rate of water. The measuring sensor may be installed in water supply line or other water line for measuring the water flow rate of the site in question. The measuring sensor can be, for example, a flow sensor. Measurement of flow rate can be based on ultrasonic measurement.

From the measuring sensor 2, the measurement data is transferred to the apartment unit 3, which is arranged to receive and possibly to store the measurement data. Figure 1 shows only one measuring sensor, but there may be several measuring sensors, as shown in Figure 2, and they may all be connected to the same apartment unit. Different measuring sensors may also be connected to separate apartment units. There may be a cabling between the measuring sensor and the apartment unit, in which case the measuring sensor receives operating current from the apartment unit and the measuring sensor itself does not need any bulky power supply. This allows the measuring sensor to be installed in a smaller space. However, the measuring sensor may also comprise its own power supply or battery, in which case the apartment unit does not have to supply power to the measuring sensor.

The apartment unit 3 comprises a microprocessor arranged to control the water consumption metering system, and a computer-readable memory in which a software for the system, as well as measurement data may be stored. The apartment unit is arranged to receive the measurement data from the measuring sensor 2 and to convert it into readable or storable form. Measurement data can be stored in the apartment unit's memory or sent directly to the apartment display paired with the apartment unit. In this context, pairing means that the apartment unit and the apartment display are entered/given each other's identification information so that they can communicate with each other. Without the correct identification information, i.e. the so-called pairing, the apartment display cannot retrieve the measurement data or the apartment unit cannot send the measurement data to each other. In other words, no outsider is able to collect measurement data using another device.

Thanks to a separate apartment unit, the measuring sensor may be installed in cramped and difficult-to-reach areas. The measuring sensor can even be covered inside structures after installation, compared to fixed display in current measuring sensors, since the measurement data is read through the apartment unit. It is also more easy and simple to retrofit the system in existing sites, as the small-sized measuring sensor does not need much space for installation and the apartment unit can be installed in an existing apartment.

The apartment display 4 comprises a display for presenting measurement data and other possible information to the user. The apartment display can be a wireless unit, in which case it comprises a battery. The battery of the apartment display can be rechargeable or the battery may be replaced with a new battery when it is empty. The battery can be charged with a separate charger or the battery can be charged via the apartment unit 3 when the apartment display is attached, i.e. so-called docked, to the apartment unit. The battery of the apartment display may also be a rechargeable battery. The apartment display may also present other information, such as the temperature of the apartment, to the user if the system comprises measuring devices for measuring this information. The apartment display may comprise a microprocessor for its operation, and a computer-readable storage medium in which it is possible to store, among other things, the measurement data sent by the apartment unit for later viewing.

The apartment display may be arranged to receive the measurement data from the apartment unit wirelessly. The apartment unit may comprise a transmitter or a transceiver, and the apartment display may comprise a receiver or a transceiver. According to one embodiment, the FSK method, i.e. the frequency modulation method, is used to transmit information between the apartment unit and the apartment display.

According to one embodiment, the apartment display continuously receives water consumption information from the apartment unit. The apartment display 4 may also be arranged to comprise a user interface which is used for operating and controlling the water metering system. Through this user interface, the user can, for example, request the apartment unit 3 to send measurement data to the apartment display. Therefore, the apartment display does not need to be in constant communication with the apartment unit, resulting in lower power consumption of the apartment display. The apartment display may comprise buttons for operating the water metering system, or the display may be a touch screen. The apartment unit can also be programmed to send measurement data to the apartment display at intervals set by the user, for example once an hour.

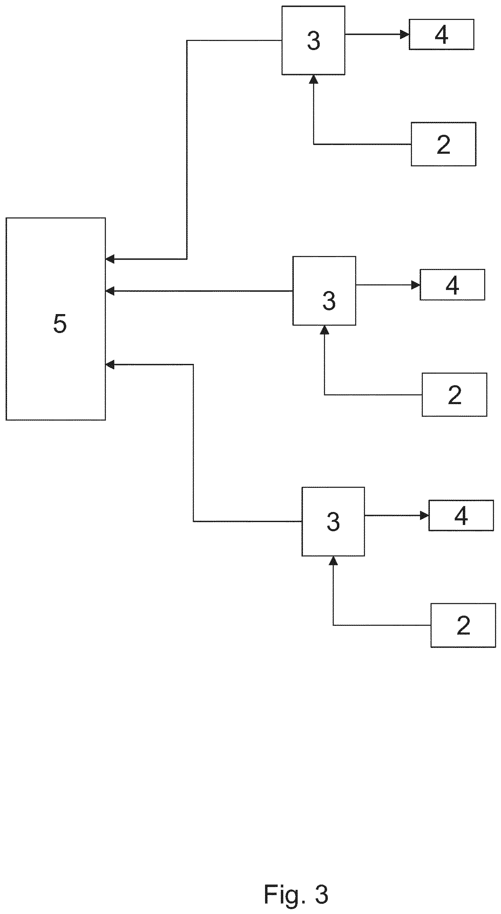

Figure 3 shows a water metering system further comprising a collection unit 5 arranged to collect measurement data from a plurality of apartment units 3. For example, an apartment building may comprise one separate apartment unit in each apartment and one common collection unit for collecting measurement data of the entire property from the apartment units. The collection unit may comprise a transmitter or a transceiver, which allows it to further communicate with a cloud service and send the measurement data via the data network to a remote server, in which case the measurement data may be monitored over the data network from anywhere.

The invention is not limited to the application examples presented above, but many modifications are possible while remaining within the scope of the inventive idea defined by the claims. For example, the material of the fastening means is preferably metal, but it is also possible to use various plastic mixtures.

## Claims

1. Water metering system (1), comprising
- a measuring sensor (2) arranged in connection with a site to be measured, such as a water pipe, for measuring the flow rate of water passing through it,
- an apartment unit (3) arranged in a residential or other apartment, and which is arranged to receive measurement data from the measuring sensor (2) and which is connected to the measuring sensor (2) via cable,
**characterized in that** the system comprises a freely movable apartment display (4) which is
- paired with the apartment unit (3), the apartment display being arranged to receive water consumption information from the apartment unit, and
- removably attachable to the apartment unit (3).

2. Water metering system (1) according to claim 1, **characterized in that** the apartment display (4) comprises a rechargeable battery, the apartment unit being arranged to charge the battery while the apartment display (4) is attached to the apartment unit (3).

3. Water metering system (1) according to claim 1 or 2, **characterized in that** the apartment display (4) is arranged to receive the water consumption information from the apartment unit (3) wirelessly.

4. Water metering system according to one of Claims 1 to 3, **characterized in that** the apartment display comprises a user interface by means of which the water metering system is arranged to be operated and controlled.

5. Water metering system according to one of Claims 1 to 4, **characterized in that** the system comprises a plurality of apartment units arranged in separate apartments, and a collection unit (5) arranged to receive measurement data from the apartment units.
